# EUROPEAN PATENT APPLICATION

(11) **EP 4 524 814 A1**
(43) Date of publication of application: **19.03.2025**
(21) Application number: 24199569.5
(22) Date of filing: 10.09.2024
(51) Int. Cl.: G06K 19/06, G06K 19/08, H01M 10/42, G06Q 10/08, G09F 3/00, H01M 6/00

(54) **POWER STORAGE CELL**

(30) Priority: 13.09.2023 JP 2023148306
(71) Applicant: TOYOTA JIDOSHA KABUSHIKI KAISHA, Aichi-ken, 471-8571 (JP)
(72) Inventor: KATO, Kazuhito, Toyota-shi, 471-8571 (JP); TAKASU, Junta, Toyota-shi, 471-8571 (JP); YAMANAKA, Atsushi, Toyota-shi, 471-8571 (JP); ONO, Masato, Toyota-shi, 471-8571 (JP); MORIYAMA, Satoshi, Toyota-shi, 471-8571 (JP); SUZUKI, Kosuke, Toyota-shi, 471-8571 (JP); SUGIE, Kazuki, Toyota-shi, 471-8571 (JP); KUMAZAWA, Kazuya, Toyota-shi, 471-8571 (JP)
(74) Representative: D Young & Co LLP

(57) **Abstract**

A power storage cell includes a cell case, a first two-dimensional identification code, and a second two-dimensional identification code. The cell case is configured to be capable of accommodating an electrode body. The first two-dimensional identification code is provided on an outer surface of the cell case. The first two-dimensional identification code is configured to enable reading of identification information. The second two-dimensional identification code is provided on the outer surface of the cell case separately from the first two-dimensional identification code. The second two-dimensional identification code is configured to enable reading of the same identification information as the first two-dimensional identification code. The second two-dimensional identification code is provided at a position that does not allow visually recognizing at least a part of the first two-dimensional identification code when the second two-dimensional identification code is seen from front.

## Description

### BACKGROUND OF THE INVENTION

### 1. Field of the Invention

The present disclosure relates to a power storge cell.

### 2. Description of Related Art

Japanese Unexamined Patent Application Publication No. 2011-210663 (JP 2011-210663 A) discloses a cylinder-shaped battery that includes a two-dimensional code showing individual identification information and an auxiliary two-dimensional code showing the same individual identification information as the two-dimensional code. The two-dimensional code is at a particular region on a battery side surface that has a first distance from a battery bottom portion and has a second distance from a battery head portion. The auxiliary two-dimensional code is at a position in the particular region that has a third distance from the two-dimensional code.

### SUMMARY OF THE INVENTION

In the cylindrical battery descried in JP 2011-210663 A, the two two-dimensional codes are disposed in the particular region, such that the distance between the two two-dimensional codes is relatively short. Since the distance between the two two-dimensional codes is relatively short, a situation where neither of the two-dimensional codes can be read arises easily.

For example, in a state where a power storage cell is equipped in a module, a situation where one two-dimensional code is not exposed to the exterior of the module and the other two-dimensional code also is not exposed to the exterior of the module arises easily. Further, for example, when the module equipped with the power storage cell is disassembled, a situation where one two-dimensional code is damaged and the other two-dimensional code also is damaged in the power storage cell arises easily.

The present disclosure has been made in view of the above problem, and has an object to provide a power storage cell that makes it easy to read the identification information from the two-dimensional identification code, regardless of the state of the power storage cell.

A power storage cell based on the present disclosure includes a cell case, a first two-dimensional identification code, and a second two-dimensional identification code. The cell case is configured to be capable of accommodating an electrode body. The first two-dimensional identification code is provided on an outer surface of the cell case. The first two-dimensional identification code is configured to enable reading of identification information. The second two-dimensional identification code is provided on the outer surface of the cell case separately from the first two-dimensional identification code. The second two-dimensional identification code is configured to enable reading of the same identification information as the first two-dimensional identification code. The second two-dimensional identification code is provided at a position that does not allow visually recognizing at least a part of the first two-dimensional identification code when the second two-dimensional identification code is seen from front.

In the above configuration, the identification information can be read from the second two-dimensional identification code, even in a direction in which the identification information cannot be read from the first two-dimensional identification code. Moreover, the identification information is easily read from the two-dimensional identification code, regardless of the state of the power storage cell.

For example, in a state where the power storage cell is equipped in a module, even when the first two-dimensional identification code is not exposed to the exterior of the module, the second two-dimensional identification code can be exposed to the exterior of the module. Therefore, the identification information can be easily read from the two-dimensional identification code. Further, for example, when the module equipped with the power storage cell is disassembled, the second two-dimensional identification code can be avoided from being damaged, even when the power storage cell is damaged on the front side of the first two-dimensional identification code. Therefore, the identification information can be easily read from the two-dimensional identification code, regardless of the state of the power storage cell.

With the present disclosure, the identification information is easily read from the two-dimensional identification code, regardless of the state of the power storage cell.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view showing a power storge cell according to an embodiment 1 from above;
FIG. 2 is a perspective view showing the power storage cell according to the embodiment 1 from below;
FIG. 3A is a diagram showing the power storage cell when a first two-dimensional identification code is seen from front;
FIG. 3B is a diagram showing the power storage cell when a second two-dimensional identification code is seen from front;
FIG. 4 is a perspective view showing a power storage cell according to a modification of the embodiment 1 from below;
FIG. 5 is a perspective view showing a power storage cell according to an embodiment 2; and
FIG. 6 is a perspective view showing a power storage cell according to an embodiment 3.

### DETAILED DESCRIPTION OF EMBODIMENTS

Power storage cells according to embodiments of the present disclosure will be described below with reference to the drawings. In the figures, identical or corresponding portions are denoted by identical reference characters, and descriptions thereof are not repeated.

### Embodiment 1

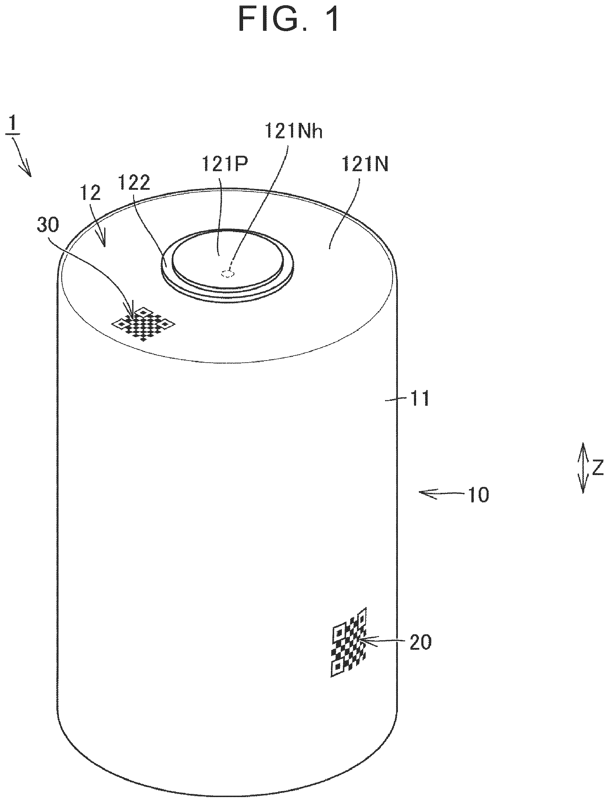

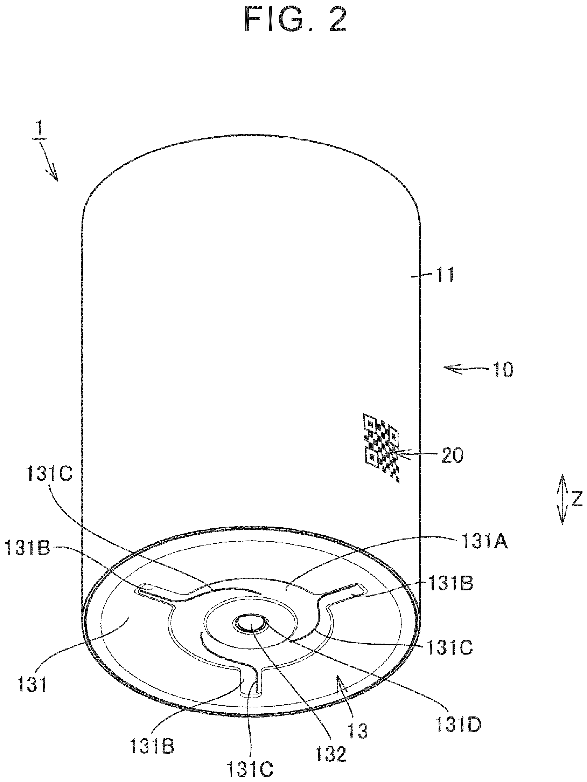

FIG. 1 is a perspective view showing a power storage cell according to an embodiment 1 from above. FIG. 2 is a perspective view showing the power storage cell according to the embodiment 1 from below.

As shown in FIG. 1 and FIG. 2, a power storage cell 1 according to the embodiment 1 of the present disclosure is a so-called cylinder-type battery. The power storage cell 1 includes a cell case 10, a first two-dimensional identification code 20, and a second two-dimensional identification code 30.

The cell case 10 is configured to be capable of accommodating an electrode body. In the embodiment, the cell case 10 accommodates the electrode body (not illustrated). The electrode body is constituted by an electrode plate group in which a positive electrode and a negative electrode are wound while a separator is interposed. The cell case 10 further accommodates an electrolytic solution (not illustrated).

The cell case 10 includes an outer peripheral wall portion 11, a top surface portion 12, and a bottom surface portion 13. The outer peripheral wall portion 11 has a cylindrical shape as an external shape. The material that composes the outer peripheral wall portion 11 is not particularly limited. The outer peripheral wall portion 11 is formed of a conductive material such as aluminum, copper, or stainless steel.

The top surface portion 12 closes one end of the outer peripheral wall portion 11. The top surface portion 12 is positioned on one side of the electrode body accommodated in the cell case 10, in an axial direction Z of the cylindrical outer peripheral wall portion 11.

The top surface portion 12 includes a top surface body portion 121N, an external terminal 121P, and an insulating member 122.

The top surface body portion 121N has a plate shape as an external shape. The top surface body portion 121N has a circular shape as an external shape, as viewed from the axial direction Z. A peripheral edge of the top surface body portion 121N is connected with the outer peripheral wall portion 11. In the embodiment, the outer peripheral wall portion 11 and the top surface body portion 121N are integrally formed as a single member. The outer peripheral wall portion 11 and the top surface body portion 121N may be formed as separate members from each other. In this case, the outer peripheral wall portion 11 and the top surface body portion 121N may be joined to each other by welding such as laser welding. A through-hole 121Nh that passes in the axial direction Z is formed roughly at the center of the top surface body portion 121N. The material that composes the top surface body portion 121N is not particularly limited. The top surface body portion 121N is formed of aluminum, copper, stainless steel, or the like.

The external terminal 121P has a circular shape as an external shape, as viewed from the axial direction Z. The external terminal 121P is positioned at an outermost end of the cell case 10 in one direction of the axial direction Z. The external terminal 121P is positioned on the outside of the top surface body portion 121N in the axial direction Z. The external terminal 121P is positioned so as to cover the through-hole 121Nh of the top surface body portion 121N. Through the through-hole 121Nh, the external terminal 121P is electrically connected with one of the positive electrode and negative electrode of the electrode body accommodated in the cell case 10. Specifically, through the through-hole 121Nh, the external terminal 121P is electrically connected with the positive electrode of the electrode body accommodated in the cell case 10. The external terminal 121P is a positive electrode terminal. In this case, the cell case 10 may further include a positive electrode current collecting plate. The external terminal 121P and the positive electrode of the electrode body may be electrically connected with each other, through the positive electrode current collecting plate. The external terminal 121P is formed of aluminum, copper, stainless steel, or the like.

The insulating member 122 insulates the top surface body portion 121N and the external terminal 121P. The insulating member 122 is disposed between the top surface body portion 121N and the external terminal 121P.

The bottom surface portion 13 closes the other end of the outer peripheral wall portion 11. The bottom surface portion 13 is positioned on the other side of the electrode body accommodated in the cell case 10, in the axial direction Z.

The bottom surface portion 13 includes a bottom surface body portion 131 and a sealing plug 132. The bottom surface body portion 131 has a plate shape as an external shape. The bottom surface body portion 131 has a circular shape as an external shape, as viewed from the axial direction Z. A peripheral edge of the bottom surface body portion 131 is connected with the outer peripheral wall portion 11. The bottom surface body portion 131 is joined to a peripheral edge of the outer peripheral wall portion 11 by welding such as laser welding. The bottom surface body portion 131 may be fixed and connected to the outer peripheral wall portion 11 by crimping the outer peripheral wall portion 11. In the case where the top surface body portion 121N and the outer peripheral wall portion 11 are formed as different members from each other, the outer peripheral wall portion 11 and the bottom surface body portion 131 may be integrally formed as a single member. The material that composes the bottom surface body portion 131 is not particularly limited. The bottom surface body portion 131 is formed of a conductive material such as aluminum, copper, or stainless steel.

The bottom surface body portion 131 is directly joined to the positive electrode or negative electrode of the electrode body in the cell case 10, by the welding from the outside of the cell case 10. Specifically, the bottom surface body portion 131 is joined to the negative electrode. Thereby, the bottom surface body portion 131 is negatively charged. The bottom surface body portion 131 may function as a negative electrode terminal. Further, the outer peripheral wall portion 11 joined to the bottom surface body portion 131 is also negatively charged. The top surface body portion 121N formed integrally with the outer peripheral wall portion 11 is also negatively charged. Consequently, the top surface body portion 121N may be connected to another power storage cell or the like, as a negative electrode terminal.

The bottom surface body portion 131 includes an annular convex portion 131A, a plurality of radial convex portions 131B, a plurality of welded portions 131C, and a through-hole 131D. The annular convex portion 131A annularly extends, as viewed from the axial direction Z. The annular convex portion 131A protrudes toward the inner side of the cell case 10. The annular convex portion 131A contacts with the negative electrode of the electrode body.

The plurality of radial convex portions 131B extends in radial directions around the center of the bottom surface portion 13, as viewed from the axial direction Z. The plurality of radial convex portions 131B is arrayed separately from each other. The plurality of radial convex portions 131B is arrayed at regular intervals in the circumferential direction. The plurality of radial convex portions 131B communicates with the annular convex portion 131A. The plurality of radial convex portions 131B protrudes toward the inner side of the cell case 10. The plurality of radial convex portions 131B contacts with the negative electrode of the electrode body.

Each of the plurality of welded portions 131C is a portion on the bottom surface body portion 131 that is joined to the negative electrode of the electrode body in the cell case 10 by welding. The plurality of welded portions 131C is formed by the laser welding from the outside of the cell case 10. The plurality of welded portions 131C is formed at the annular convex portion 131A. At the annular convex portion 131A, the plurality of welded portions 131C is formed so as to extend along a circumferential direction around the center of the bottom surface portion 13, as viewed from the axial direction Z. The plurality of welded portions 131C is formed at the plurality of radial convex portions 131B, respectively. At the radial convex portions 131B, the welded portions 131C are formed so as to extend along radial directions. The annular convex portion 131A and the plurality of radial convex portions 131B may have a thinner thickness than the other portion of the bottom surface body portion 131. Thereby, the welded portions 131C are easily formed.

The through-hole 131D is formed at the center of the bottom surface body portion 131, as viewed from the axial direction Z. The through-hole 131D may be used for injecting the electrolytic solution accommodated in the cell case 10.

The sealing plug 132 is inserted into the through-hole 131D of the bottom surface body portion 131. Thereby, the sealing plug 132 is fixed to the bottom surface body portion 131. The through-hole 131D and the sealing plug 132 may function as a pressure releasing valve for releasing the pressure of the interior of the cell case 10 when the pressure of the interior of the cell case 10 is excessively high.

The first two-dimensional identification code 20 is configured such that a predetermined reader can read identification information. For example, the identification information includes individual identification information about the power storage cell 1 on which the first two-dimensional identification code 20 is provided. For example, the individual identification information includes the manufacture date, manufacture time, manufacture line, lot number and others of the power storage cell 1. For example, the first two-dimensional identification code 20 is a QR code (R).

The first two-dimensional identification code 20 is provided on an outer surface of the cell case 10. The first two-dimensional identification code 20 may be directly printed on the outer surface of the cell case 10 by ink or the like, or a label on which the first two-dimensional identification code 20 has been previously printed may be pasted to the outer surface of the cell case 10. The first two-dimensional identification code 20 may be impressed on the cell case 10 by laser or the like. In the embodiment, the first two-dimensional identification code 20 is provided on the outer peripheral wall portion 11.

The second two-dimensional identification code 30 is configured to enable reading of the same identification information as the first two-dimensional identification code 20. At least some of the identification information that is read from the second two-dimensional identification code 30 may be the same as the identification information that is read from the first two-dimensional identification code 20. For example, the second two-dimensional identification code 30 is a QR code (R). It is preferable that the second two-dimensional identification code 30 be the same as the first two-dimensional identification code 20.

The second two-dimensional identification code 30 is separate from the first two-dimensional identification code 20. The second two-dimensional identification code 30 is provided on the outer surface of the cell case 10. The second two-dimensional identification code 30 may be directly printed on the outer surface of the cell case 10 by ink or the like, or a label on which the second two-dimensional identification code 30 has been previously printed may be pasted to the outer surface of the cell case 10. The second two-dimensional identification code 30 may be impressed on the cell case 10 by laser or the like.

In the embodiment, the second two-dimensional identification code 30 is provided on the top surface portion 12. Specifically, the second two-dimensional identification code 30 is provided on the top surface body portion 121N.

The position of the first two-dimensional identification code 20 and the position of the second two-dimensional identification code 30 may be mutually reversed. That is, the first two-dimensional identification code 20 may be provided on the top surface portion 12, and the second two-dimensional identification code 30 may be provided on the outer peripheral wall portion 11.

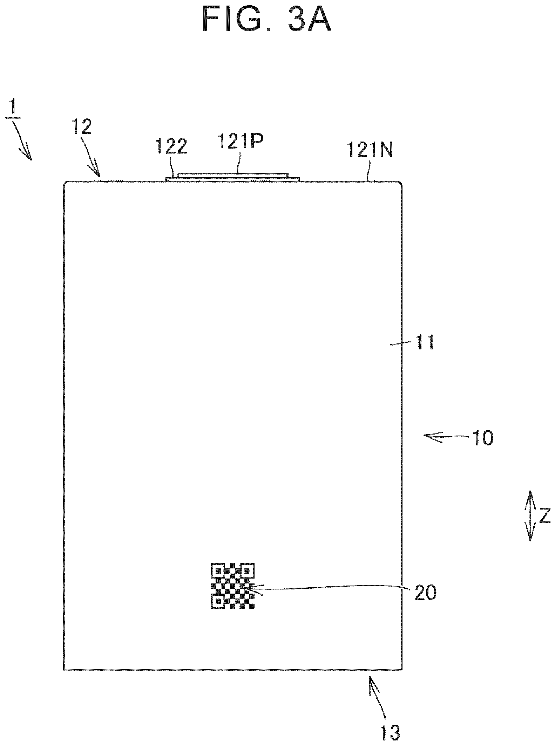

FIG. 3A is a diagram showing the power storage cell when the first two-dimensional identification code is seen from front. As shown in FIG. 3A, the first two-dimensional identification code 20 is provided at a position that does not allow visually recognizing at least a part of the second two-dimensional identification code 30 when the first two-dimensional identification code 20 is seen from front. Specifically, the first two-dimensional identification code 20 is provided at a position that does not allow visually recognizing any of the second two-dimensional identification code 30 when the first two-dimensional identification code 20 is seen from front. This is because the top surface body portion 121N extends in a plane direction orthogonal to the axial direction Z of the outer peripheral wall portion 11.

In the present specification, the front of the two-dimensional identification code is at a position on a certain imaginary straight line. The imaginary straight line is a normal line drawn at a central portion of a region that is on the outer surface of the cell case 10 and where the two-dimensional identification code is provided.

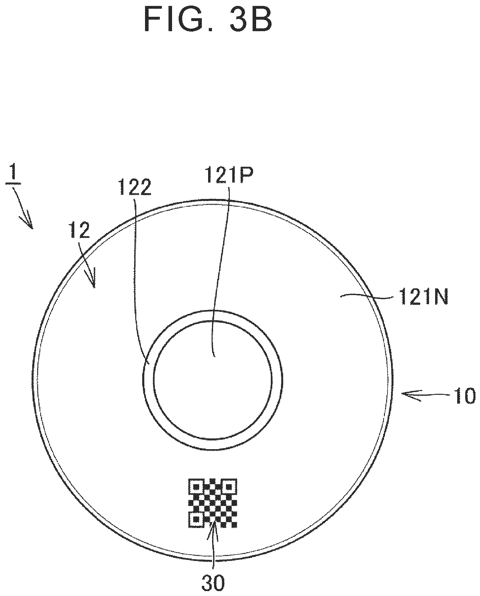

FIG. 3B is a diagram showing the power storage cell when the second two-dimensional identification code is seen from front. As shown in FIG. 3B, the second two-dimensional identification code 30 is provided at a position that does not allow visually recognizing at least a part of the first two-dimensional identification code 20 when the second two-dimensional identification code 30 is seen from front. Specifically, the second two-dimensional identification code 30 is provided at a position that does not allow visually recognizing any of the first two-dimensional identification code 20 when the second two-dimensional identification code 30 is seen from front. This is because an outer peripheral surface of the outer peripheral wall portion 11 extends in a direction orthogonal to the plane direction in which the top surface body portion 121N extends.

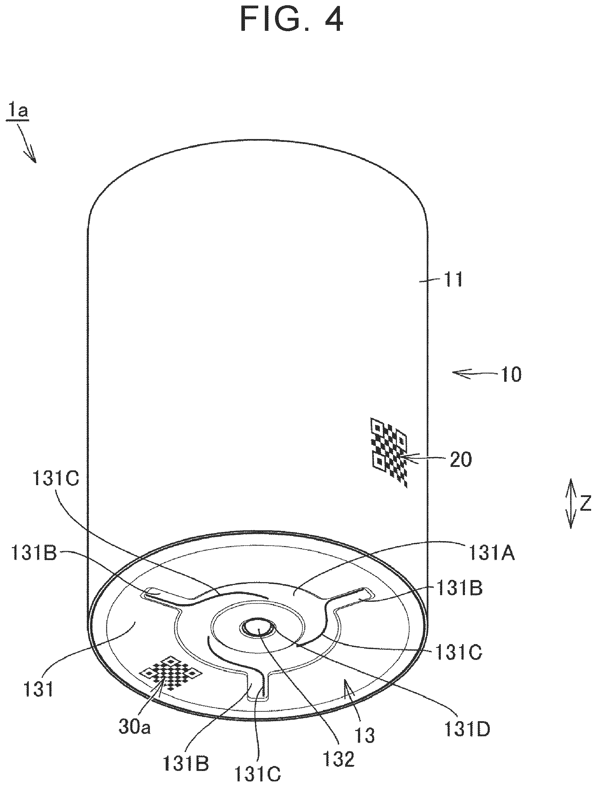

Further, the second two-dimensional identification code 30 may be provided on the bottom surface portion 13. FIG. 4 is a perspective view showing a power storage cell according to a modification of the embodiment 1 from below. As shown in FIG. 4, in a power storage cell 1a according to the modification of the embodiment 1, a second two-dimensional identification code 30a is provided on the bottom surface portion 13. Specifically, the second two-dimensional identification code 30a is provided on the bottom surface body portion 131. Also in the modification, the position of the first two-dimensional identification code 20 and the position of the second two-dimensional identification code 30a may be mutually reversed. That is, the second two-dimensional identification code 30a may be provided on the outer peripheral wall portion 11, and the first two-dimensional identification code 20 may be provided on the bottom surface portion 13.

Also in the embodiment, the first two-dimensional identification code 20 is provided at a position that does not allow visually recognizing at least a part of the second two-dimensional identification code 30a when the first two-dimensional identification code 20 is seen from front. The second two-dimensional identification code 30a is provided at a position that does not allow visually recognizing at least a part of the first two-dimensional identification code 20 when the second two-dimensional identification code 30a is seen from front.

Further, the power storage cell 1 may include three or more two-dimensional identification codes. For example, a third two-dimensional identification code can be disposed at positions where the first two-dimensional identification code 20 and the second two-dimensional identification code 30 can be disposed in the embodiment and the above modification.

As described above, the power storage cell 1 according to the embodiment 1 of the present disclosure includes the cell case 10, the first two-dimensional identification code 20, and the second two-dimensional identification code 30. The cell case 10 is configured to be capable of accommodating the electrode body. The first two-dimensional identification code 20 is provided on the outer surface of the cell case 10. The first two-dimensional identification code 20 is configured to enable the reading of the identification information. The second two-dimensional identification code 30 is provided on the outer surface of the cell case 10 separately from the first two-dimensional identification code 20. The second two-dimensional identification code 30 is configured to enable the reading of the same identification information as the first two-dimensional identification code 20. The second two-dimensional identification code 30 is provided at the position that does not allow visually recognizing at least a part of the first two-dimensional identification code 20 when the second two-dimensional identification code 30 is seen from front.

In the above configuration, the identification information can be read from the second two-dimensional identification code 30, even in a direction in which the identification information cannot be read from the first two-dimensional identification code 20. Moreover, the identification information is easily read from the two-dimensional identification code, regardless of the state of the power storage cell 1.

For example, in a state where the power storage cell 1 is equipped in a module, even when the first two-dimensional identification code 20 is not exposed to the exterior of the module, the second two-dimensional identification code 30 can be exposed to the exterior of the module. Therefore, the identification information can be easily read from the two-dimensional identification code. Further, for example, when the module equipped with the power storge cell 1 is disassembled, the second two-dimensional identification code 30 can be avoided from being damaged, even when the power storage cell 1 is damaged on the front side of the first two-dimensional identification code 20. Therefore, the identification information can be easily read from the two-dimensional identification code, regardless of the state of the power storage cell 1.

Furthermore, in the embodiment 1 of the present disclosure, the cell case 10 includes the outer peripheral wall portion 11, the top surface portion 12, and the bottom surface portion 13. The outer peripheral wall portion 11 has a cylindrical shape. The top surface portion 12 closes one end of the outer peripheral wall portion 11. The bottom surface portion 13 closes the other end of the outer peripheral wall portion 11. One of the first two-dimensional identification code 20 and the second two-dimensional identification code 30 is provided on the outer peripheral wall portion 11. The other of the first two-dimensional identification code 20 and the second two-dimensional identification code 30 is provided on the top surface portion 12 or the bottom surface portion 13.

In the above configuration, even when the power storage cell 1 has a so-called cylinder-type shape, the identification information is easily read from the two-dimensional identification code, regardless of the state of the power storage cell 1.

For example, in a state before the power storage cell 1 is embedded in the module, the identification information can be read from the two-dimensional identification code on the outer peripheral wall portion 11. Meanwhile, in some cases, a plurality of power storage cells 1 is embedded in the module, and the outer peripheral wall portions 11 of the power storage cells 1 are arranged so as to face each other. In this case, the identification information can be read from the two-dimensional identification code on the top surface portion 12 or the bottom surface portion 13. Therefore, even when the power storage cell has a so-called cylinder-type shape, the identification information is easily read from the two-dimensional identification code, regardless of the state of the power storage cell 1.

### Embodiment 2

A power storage cell according to an embodiment 2 of the present disclosure will be described below. The embodiment 2 of the present disclosure is different from the embodiment 1 in the position of the first two-dimensional identification code. Descriptions about the same configurations and effects as those in the embodiment 1 are not repeated.

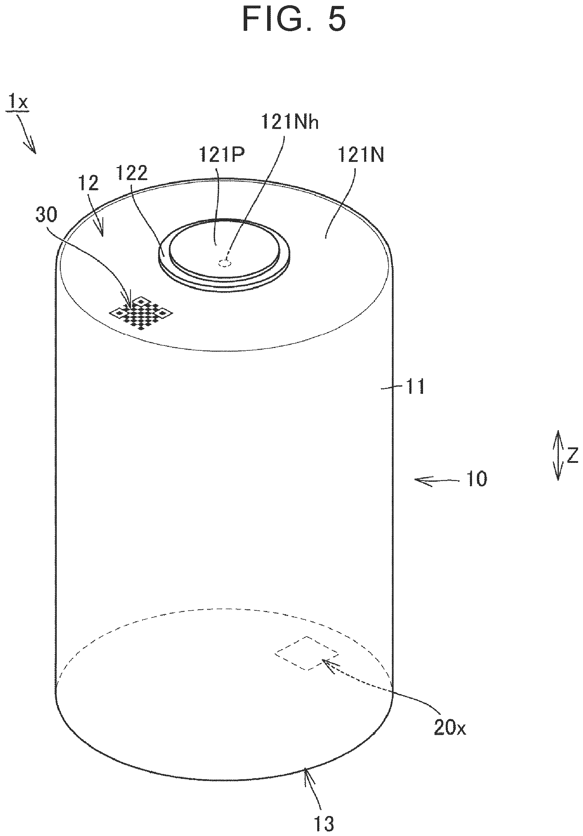

FIG. 5 is a perspective view showing a power storage cell according to the embodiment 2. As shown in FIG. 5, in a power storage cell 1x according to the embodiment 2 of the present disclosure, one of a first two-dimensional identification code 20x and the second two-dimensional identification code 30 is provided on the top surface portion 12. The other of the first two-dimensional identification code 20x and the second two-dimensional identification code 30 is provided on the bottom surface portion 13.

In the above configuration, even when the power storage cell 1x has a so-called cylinder-type shape, the identification information is easily read from the two-dimensional identification code, regardless of the state of the power storage cell 1x.

For example, in the case where one of the top surface body portion 121N of the top surface portion 12 and the bottom surface body portion 131 of the bottom surface portion 13 is connected to a bus-bar or the like as the negative electrode terminal, the identification information can be read from the two-dimensional identification code provided on the other of the top surface body portion 121N of the top surface portion 12 and the bottom surface body portion 131 of the bottom surface portion 13. Therefore, even when the power storage cell has a so-called cylinder-type shape, the identification information is easily read from the two-dimensional identification code.

In the embodiment, specifically, the first two-dimensional identification code 20x is provided on the bottom surface portion 13, and the second two-dimensional identification code 30 is provided on the top surface portion 12. The position of the first two-dimensional identification code 20x and the position of the second two-dimensional identification code 30 may be mutually reversed. That is, the first two-dimensional identification code 20x may be provided on the top surface portion 12, and the second two-dimensional identification code 30 may be provided on the bottom surface portion 13.

The first two-dimensional identification code 20x and the second two-dimensional identification code 30 are not arrayed in the axial direction Z. The first two-dimensional identification code 20x and the second two-dimensional identification code 30 may be arrayed in the axial direction Z.

### Embodiment 3

A power storage cell according to an embodiment 3 of the present disclosure will be described below. The embodiment 3 of the present disclosure is different from the embodiment 1 in the position of the second two-dimensional identification code. Descriptions about the same configurations and effects as those in the embodiment 1 are not repeated.

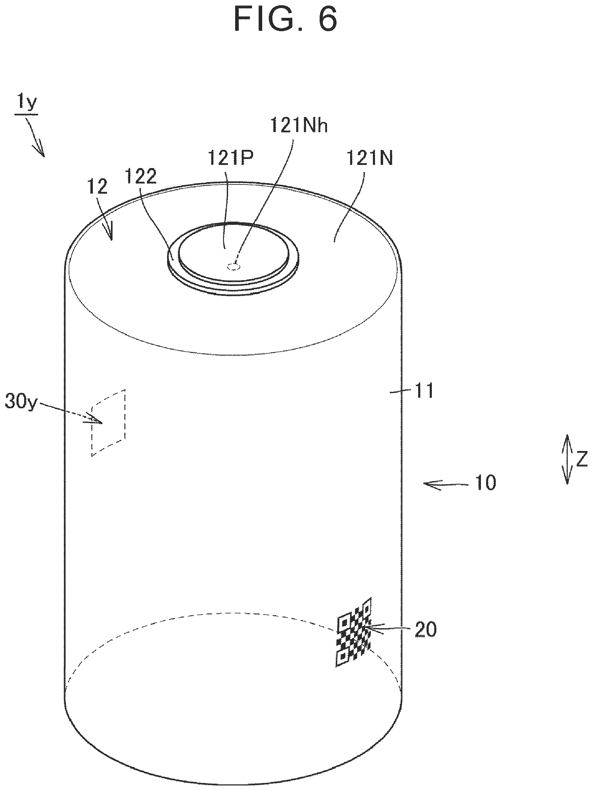

FIG. 6 is a perspective view showing a power storage cell according to the embodiment 3. As shown in FIG. 6, in a power storage cell 1y according to the embodiment 3 of the present disclosure, the first two-dimensional identification code 20 is provided on the outer peripheral wall portion 11. A second two-dimensional identification code 30y is provided on the outer peripheral wall portion 11 so as to face in a direction opposite to a direction in which the first two-dimensional identification code 20 faces.

In the above configuration, even when the power storage cell 1y has a so-called cylinder-type shape, the identification information is easily read from the two-dimensional identification code, regardless of the state of the power storage cell 1y.

For example, even when the power storage cell 1y is damaged on the front side of the first two-dimensional identification code 20, the second two-dimensional identification code 30y, which faces in the direction opposite to the direction in which the first two-dimensional identification code 20 faces, is easily avoided from being damaged. Therefore, the identification information can be easily read from the two-dimensional identification code, regardless of the state of the power storage cell 1y.

In the embodiment, the first two-dimensional identification code 20 and the second two-dimensional identification code 30y are not arrayed in an imaginary plane direction orthogonal to the axial direction Z. The first two-dimensional identification code 20 and the second two-dimensional identification code 30y may be arrayed in the imaginary plane direction orthogonal to the axial direction Z.

In the above description of the embodiments, configures that can be combined may be combined with each other.

It should be understood that the above disclosed embodiments are examples and are not limitative in all respects. It is intended that the scope of the present disclosure is shown not by the above description of the embodiments but by the claims and includes all alterations within meanings and scopes that are equivalent to the claims.

## Claims

1. A power storage cell comprising:
a cell case configured to be capable of accommodating an electrode body;
a first two-dimensional identification code provided on an outer surface of the cell case and configured to enable reading of identification information; and
a second two-dimensional identification code provided on the outer surface of the cell case separately from the first two-dimensional identification code and configured to enable reading of the same identification information as the first two-dimensional identification code, wherein the second two-dimensional identification code is provided at a position that does not allow visually recognizing at least a part of the first two-dimensional identification code when the second two-dimensional identification code is seen from front.

2. The power storage cell according to claim 1, wherein:
the cell case includes
a cylindrical outer peripheral wall portion,
a top surface portion that closes one end of the outer peripheral wall portion, and
a bottom surface portion that closes another end of the outer peripheral wall portion;
one of the first two-dimensional identification code and the second two-dimensional identification code is provided on the outer peripheral wall portion; and
another of the first two-dimensional identification code and the second two-dimensional identification code is provided on the top surface portion or the bottom surface portion.

3. The power storage cell according to claim 1, wherein:
the cell case includes
a cylindrical outer peripheral wall portion,
a top surface portion that closes one end of the outer peripheral wall portion, and
a bottom surface portion that closes another end of the outer peripheral wall portion;
one of the first two-dimensional identification code and the second two-dimensional identification code is provided on the top surface portion; and
another of the first two-dimensional identification code and the second two-dimensional identification code is provided on the bottom surface portion.

4. The power storage cell according to claim 1, wherein:
the cell case includes
a cylindrical outer peripheral wall portion,
a top surface portion that closes one end of the outer peripheral wall portion, and
a bottom surface portion that closes another end of the outer peripheral wall portion;
the first two-dimensional identification code is provided on the outer peripheral wall portion; and
the second two-dimensional identification code is provided on the outer peripheral wall portion so as to face in a direction opposite to a direction in which the first two-dimensional identification code faces.
